# EUROPÄISCHE PATENTANMELDUNG

(11) **EP 2 327 871 A2**
(43) Veröffentlichungstag der Anmeldung: **01.06.2011**
(21) Anmeldenummer: 10187684.5
(22) Anmeldetag: 15.10.2010
(51) Int. Cl.: F02M 37/10

(54) **Verfahren zum Betreiben einer Kraftstoffpumpe in einem Kraftfahrzeug und Kraftstoffpumpe**

(30) Priorität: 25.11.2009 DE 102009055673; 14.01.2010 DE 102010004658
(71) Anmelder: Continental Automotive GmbH, 30165 Hannover (DE)
(72) Erfinder: Fischer, Matthias, 37296, Datterode (DE); Gebühr, Stefan, 99834, Gerstungen (DE); Grossmann, Reiner, 99510, Wiegendorf (DE); Schmidt, Christoph, 36199, Rotenburg (DE)

(57) **Zusammenfassung**

Gegenstand der Erfindung ist ein Verfahren zum Betreiben einer Kraftstoffpumpe in einem Kraftfahrzeug und eine Kraftstoffpumpe, wobei ein in einem Gehäuse der Kraftstoffpumpe angeordneter bürstenloser Gleichstrommotor einen Stator und einen auf einer Welle angeordneten Rotor aufweist. Bei einer Drehung des Rotors wird über die Welle mindestens eine ebenfalls in dem Gehäuse angeordnete Pumpstufe angetrieben. Die für die Ermittlung der Kommutierung erforderlichen Größen des Gleichstrommotors werden an einen Prozessor in der Motorsteuerung des Kraftfahrzeugs geleitet, wobei der Prozessor aufgrund dieser Größen nach der feldorientierten Regelung die elektrischen Signale für die Kommutierung erzeugt und dass diese elektrischen Signale für die Kommutierung dem bürstenlosen Gleichstrommotor zugeführt werden.

## Beschreibung

Verfahren zum Betreiben einer Kraftstoffpumpe in einem Kraftfahrzeug und Kraftstoffpumpe

Gegenstand der Erfindung ist ein Verfahren zum Betreiben einer Kraftstoffpumpe in einem Kraftfahrzeug, bei dem ein in einem Gehäuse der Kraftstoffpumpe angeordneter bürstenloser Gleichstrommotor einen Stator und einen auf einer Welle angeordneten Rotor aufweist, wobei bei einer Drehung des Rotors über die Welle mindestens eine ebenfalls in dem Gehäuse angeordnete Pumpstufe angetrieben wird.

Die bürstenlosen Gleichstrommotoren derartiger Kraftstoffpumpen sind häufig als elektronisch kommutierte bürstenlose Gleichstrommotoren ausgebildet und werden beispielsweise in Kraftstoffbehältern von Kraftfahrzeugen eingesetzt, um Kraftstoff aus dem Kraftstoffbehälter zu einer Brennkraftmaschine zu fördern. Für die Bestimmung des Kommutierungszeitpunktes ist die Rotorlage eine entscheidende Größe. Für die Kommutierung werden daher Sensoren verwendet, welche die Lage des Rotors im Gleichstrommotor ermitteln, um aus dieser Information die Zeitpunkte für die Kommutierung zu bestimmen. Dazu ist es bekannt, Hallsensoren einzusetzen, welche um 120° versetzt um die Welle angeordnet werden. Die Kommutierung lässt sich auf verschiedene Weise realisieren. Ein häufig verwendetes Verfahren für Kraftstoffpumpen, welches sich durch geringe Kosten auszeichnet, ist die 120°-Blockkommutierung, bei der immer zwei Phasen bestromt werden. Nachteilig an diesem Kommutierungsverfahren sind das Akustikverhalten und das Auftreten von Drehmomentenrippel im nicht unerheblichen Maße.

Darüber hinaus gibt es weitere Verfahren zur Kommutierung. Eines dieser Verfahren ist die feldorientierte Kommutierung (Field Oriented Control - FOC). Nach diesem Kommutierungsverfahren werden alle Phasen bestromt. Diese Art der Kommutierung ist sehr flexibel und leistungsfähig. Der Nachteil dieser Art der Kommutierung besteht darin, dass dieses Verfahren einen erheblichen Rechenaufwand erfordert, der nur mit entsprechend leistungsfähigen Prozessoren bewältigt werden kann. Derartige Prozessoren für Kraftstoffpumpen stehen aus Kostengründen nicht zur Verfügung.

Der Erfindung liegt daher die Aufgabe zugrunde, ein Verfahren zum Betreiben einer Kraftstoffpumpe zu schaffen, welches die genannten Nachteile vermeidet und darüber hinaus möglichst kostengünstig realisierbar ist. Eine zweite Aufgabe besteht darin eine Kraftstoffpumpe zu schaffen, die einfach aufgebaut ist, und deren Parameter durch die Kommutierung möglichst wenig beeinflusst werden.

Erfindungsgemäß wird die erste Aufgabe dadurch gelöst, dass die für die Ermittlung der Kommutierung erforderlichen Größen des Gleichstrommotors an einen Prozessor in der Motorsteuerung des Kraftfahrzeugs geleitet werden, dass der Prozessor aufgrund dieser Größen nach der feldorientierten Kommutierung die elektrischen Signale für die Kommutierung erzeugt und dass diese elektrischen Signale für die Kommutierung dem bürstenlosen Gleichstrommotor zugeführt werden.

Indem die für die Kommutierung erforderlichen elektrischen Signale in einem Prozessor der Motorsteuerung erzeugt werden, wird es ermöglicht, die feldorientierte Kommutierung für bürstenlose Gleichstrommotoren in Kraftstoffpumpen zu verwenden. Die dort zum Einsatz kommenden Prozessoren sind bereits so leistungsstark, dass sie die für diese Art der Kommutierung erforderlichen Rechenleistungen bewerkstelligen können. Das hat den Vorteil, dass keine zusätzlichen Prozessoren für die Kommutierung in der Kraftstoffpumpe angeordnet werden müssen. Mit der Verwendung der feldorientierten Regelung für einen Gleichstrommotor einer Kraftstoffpumpe wird die Leistungsfähigkeit der Kraftstoffpumpe gegenüber der 120°-Blockkommutierung beträchtlich erhöht, da bei der feldorientierten Kommutierung alle Phasen bestromt werden. Dadurch wird es ermöglicht, bei gleichen elektrischen und mechanischen Parametern einen Elektromotor mit einer kleineren Baugröße zu verwenden, wodurch auch die Kraftstoffpumpe kleiner als bisher verwendete Kraftstoffpumpen sein kann. Des Weiteren erlaubt die feldorientierte Regelung eine Sinusbestromung, die gegenüber der 120°-Blockkommutierung ein verbessertes Akustikverhalten infolge des reduzierten Körperschalls aufweist. Dies ist insbesondere bei Kraftstoffpumpen ein wichtiges Einsatzkriterium.

In einer vorteilhaften Ausgestaltung werden die Strom- und Spannungswerte der Motorspulen gemessen, dem Prozessor zugeführt und im Prozessor mathematisch in Rotorwinkel und Winkelgeschwindigkeit transformiert. Auf diese Weise wird die Rotorlage durch elektrische Größen mathematisch im Prozessor der Motorsteuerung bestimmt und daraus die elektrischen Signale für die Kommutierung des bürstenlosen Gleichstrommotors erzeugt. Somit sind keine Sensoren zur Ermittlung der Rotorlage in der Kraftstoffpumpe erforderlich. Mit dem Wegfall der Sensoren verringert sich der Bauraum, den eine derart ausgebildete Kraftstoffpumpe erfordert.

Die zweite Aufgabe wird erfindungsgemäß dadurch gelöst, dass die Kraftstoffpumpe mit der Motorsteuerung des Kraftfahrzeugs verbunden ist, wobei die Motorsteuerung mindestens einen Prozessor für die Ermittlung der für die Kommutierung des bürstenlosen Gleichstrommotors erforderlichen Größen besitzt, so dass die für die Kommutierung erforderlichen Größen diesem Prozessor zuführbar sind und von dem Prozessor nach der feldorientierten Regelung erzeugte elektrische Signale für die Kommutierung dem Gleichstrommotor zuführbar sind.

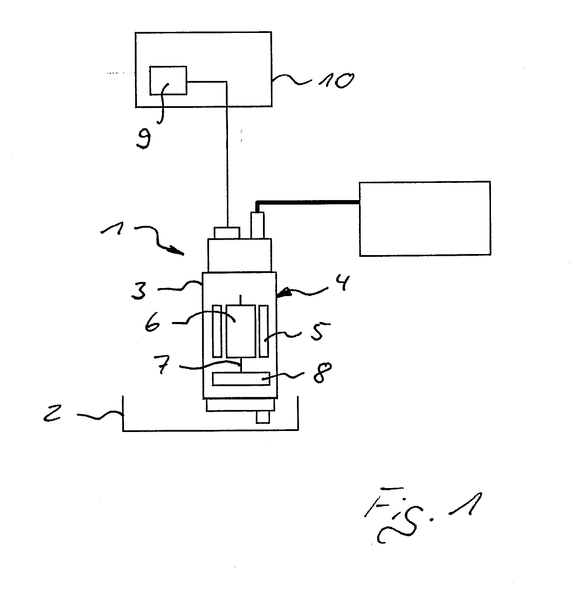

An einem Ausführungsbeispiel wird die Erfindung näher erläutert:
In der einzigen Figur ist eine Kraftstoffpumpe 1 in einem Kraftstoffbehälter 2 eines Kraftfahrzeugs dargestellt. Die Kraftstoffpumpe 1 besitzt eine Gehäuse 3, in dem ein Gleichstrommotor 4 angeordnet ist. Der Gleichstrommotor besteht aus einem Stator 5 und einem Rotor 6. Bei einer Drehung des Rotors 6 wird über eine Welle 7 des Rotors 6 eine Pumpenstufe 8 in der Kraftstoffpumpe 1 angetrieben, wodurch Kraftstoff aus dem Kraftstoffbehälter 2 zu einer nicht dargestellten Brennkraftmaschine des Kraftfahrzeugs gefördert wird. Die Kraftstoffpumpe 1 ist mit einem Prozessor 9 einer Motorsteuerung 10 des Kraftfahrzeugs verbunden. Über diese Verbindung werden für die Kommutierung erforderliche Größen des bürstenlosen Gleichstrommotors 4 dem Prozessor 9 zugeführt. In dem Prozessor 9 werden daraufhin die für die Kommutierung erforderlichen elektrischen Signale nach der feldorientierten Regelung erzeugt und anschließend dem bürstenlosen Gleichstrommotor 4 für die Kommutierung zugeführt. Werden, wie in diesem Ausführungsbeispiel dargestellt, keine Sensoren zur Bestimmung der Rotorlage verwendet, erfolgt die Bestimmung der Rotorlage im Prozessor 9, indem Strom- und Spannungswerte der Motorspulen des Gleichstrommotors 4 gemessen werden, dem Prozessor 9 zugeführt und im Prozessor 9 mathematisch in Rotorwinkel und Winkelgeschwindigkeit transformiert werden. Aus diesen Werten lassen sich anschließend die elektrischen Signale für die Kommutierung im Prozessor 9 erzeugen.

## Patentansprüche

1. Verfahren zum Betreiben einer Kraftstoffpumpe in einem Kraftfahrzeug, bei dem ein in einem Gehäuse der Kraftstoffpumpe angeordneter bürstenloser Gleichstrommotor einen Stator und einen auf einer Welle angeordneten Rotor aufweist, wobei bei einer Drehung des Rotors über die Welle mindestens eine ebenfalls in dem Gehäuse angeordnete Pumpstufe angetrieben wird, **dadurch gekennzeichnet , dass** die für die Ermittlung der Kommutierung erforderlichen Größen des bürstenlosen Gleichstrommotors an einen Prozessor in der Motorsteuerung des Kraftfahrzeugs geleitet werden, dass der Prozessor aufgrund dieser Größen nach der feldorientierten Regelung die elektrischen Signale für die Kommutierung erzeugt und dass diese elektrischen Signale für die Kommutierung dem Gleichstrommotor zugeführt werden.

2. Verfahren nach Anspruch 1, **dadurch gekennzeichnet, dass** zur Bestimmung der Rotorlage des Gleichstrommotors Strom- und Spannungswerte der Motorspulen gemessen, dem Prozessor zugeführt und im Prozessor mathematisch in Rotorwinkel und Winkelgeschwindigkeit transformiert werden.

3. Kraftstoffpumpe in einem Kraftfahrzeug, bestehend aus einem Gehäuse mit einem darin angeordneten bürstenlosen Gleichstrommotor, der einen Stator und einen auf einer Welle angeordneten Rotor aufweist, wobei bei einer Drehung des Rotors über die Welle mindestens eine ebenfalls in dem Gehäuse angeordnete Pumpstufe antreibbar ist, **dadurch gekennzeichnet , dass** die Kraftstoffpumpe mit der Motorsteuerung des Kraftfahrzeugs verbunden ist, wobei die Motorsteuerung mindestens einen Prozessor für die Ermittlung der für die Kommutierung des bürstenlosen Gleichstrommotors erforderlichen Größen besitzt, so dass die für die Kommutierung erforderlichen Größen diesem Prozessor zuführbar sind und von dem Prozessor nach der feldorientierten Regelung erzeugte elektrische Signale für die Kommutierung dem Gleichstrommotor zuführbar sind.
